(19) **Europäisches Patentamt / European Patent Office / Office européen des brevets**

(11) **EP 3 894 297 B1**

(12) # FASCICULE DE BREVET EUROPEEN

(45) Date de publication et mention de la délivrance du brevet:
**16.10.2024 Bulletin 2024/42**

(21) Numéro de dépôt: **19817321.3**

(22) Date de dépôt: **12.12.2019**

(51) Classification Internationale des Brevets (IPC):
**B60W 40/072** $^{(2012.01)}$ **B60W 50/14** $^{(2020.01)}$
**G01C 21/32** $^{(2006.01)}$ **B60W 50/00** $^{(2006.01)}$

(52) Classification Coopérative des Brevets (CPC):
**B60W 40/072; B60W 50/14;** B60W 2050/0051;
B60W 2552/05; B60W 2556/45; B60W 2556/50

(86) Numéro de dépôt international:
**PCT/EP2019/084913**

(87) Numéro de publication internationale:
**WO 2020/120686 (18.06.2020 Gazette 2020/25)**

(54) **PROCÉDÉ DE CARACTÉRISATION DE VIRAGES POUR L'AVERTISSEMENT DE CONDUCTEURS**

VERFAHREN ZUR CHARAKTERISIERUNG VON KURVEN ZUR WARNUNG VON FAHRERN

METHOD FOR CHARACTERISING BENDS FOR WARNING DRIVERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.12.2018 FR 1872741**

(43) Date de publication de la demande:
**20.10.2021 Bulletin 2021/42**

(73) Titulaire: **Continental Automotive Technologies GmbH**
**30175 Hannover (DE)**

(72) Inventeurs:
- **CORBIERE, Grégoire**
**31100 Toulouse (FR)**

- **IBARZ, Jean**
**31100 Toulouse (FR)**
- **LAFUMAT, Romain**
**31100 Toulouse (FR)**

(74) Mandataire: **Continental Corporation France**
**c/o Continental Automotive France**
**Service Intellectual Property**
**1, avenue Paul Ourliac**
**31100 Toulouse (FR)**

(56) Documents cités:
**EP-A1- 0 789 225** **EP-A1- 3 385 673**
**DE-A1- 19 749 916** **FR-A1- 2 920 240**
**US-A- 5 465 089**

## Description

### [Domaine technique]

L'invention concerne un procédé de caractérisation de la courbure d'un tronçon de route, à partir d'une suite ordonnée de points du tronçon. L'invention concerne également un dispositif d'avertissement de virages pour un conducteur de véhicule, les virages étant caractérisés grâce au procédé.

### [Etat de la technique antérieure]

Pour des raisons de sécurité, il est important de pouvoir avertir des conducteurs de véhicules de l'imminence d'un virage, et également de pouvoir caractériser le niveau de courbure du virage, afin que le conducteur puisse adapter sa vitesse.

Pour ce faire, des solutions ont été proposées dans lesquelles la courbure d'un tronçon de route emprunté par un véhicule est calculée en temps réel à partir de données détectées par des capteurs embarqués dans le véhicule.

C'est par exemple le cas du brevet du document US 2005 251 335 A1 ou du document US 6 138 084 B, dans lesquels on détermine une localisation du véhicule à partir de données GPS croisées avec des données cartographiques, puis on estime la courbure du prochain tronçon de route abordé par le véhicule par sélection de trois points du tronçon et estimation d'une courbure du tronçon à partir de ces points.

Ces méthodes présentent plusieurs inconvénients. D'une part, le calcul en temps réel de la courbure d'un tronçon de route emprunté par un véhicule peut être coûteux en moyens de calcul et peut impliquer une dégradation des performances du calculateur embarqué dans le véhicule pour d'autres applications ou un retard dans l'affichage des informations relatives au tronçon de route. D'autre part, ces méthodes impliquent d'avoir accès en permanence à la localisation exacte du véhicule. Enfin, ces méthodes ne permettent pas de capitaliser les informations calculées pour caractériser des virages de route indépendamment des trajets d'un véhicule donné. Si le véhicule repasse par le même virage, il doit reproduire des calculs déjà réalisés.

On connaît également des solutions permettant d'identifier des virages dans des tronçons de routes à partir de données cartographiques.

Par exemple, l'article de R. Andrásik et al. « Identification of Curves and Straight Sections on Road Networks from Digital Vector Data », DOI :10.2478/v10158-012-0033-0, décrit une méthode d'identification automatique de virages à partir de données géographiques. Cependant, la méthode décrite ne permet pas de caractériser des virages, par exemple par leur niveau de courbure. Or, cette information est importante pour qu'un conducteur puisse adapter sa vitesse.

La demande de brevet FR 2 920 240 A1 décrit une méthode pour déterminer la courbure d'une route et la signaler à un conducteur.

La demande de brevet US 5 465 089 A décrit une méthode permettant à conducteur d'anticiper une caractéristique d'un virage sur un itinéraire.

La demande de brevet EP 3 385 673 A1 décrit une méthode de réduction de noeuds intermédiaires basée sur l'algorithme de Douglas-Peucker.

Pour caractériser la courbure d'une ligne, plusieurs techniques ont été présentées dans l'article de D. Coeurjolly et al. « Discrète Curvature Based on Osculating Circle Estimation », in : Arcelli C., Cordella L.P., di Baja G.S. (eds) Visual Form 2001, Lecture Notes in Computer Science, vol. 2059. Springer, Berlin, Heidelberg. En particulier, une technique couramment utilisée est de déterminer le rayon de courbure d'une ligne par ajustement d'un cercle circonscrit à trois points consécutifs de la ligne. En revanche, cette technique n'est applicable que dans des cas où l'échantillonnage des points de la ligne est constant, ce qui est le cas dans cet article puisque les traitements sont mis en oeuvre sur des images pixellisées, on dispose donc d'informations échantillonnées au pixel.

Or certaines cartographies routières ne sont pas échantillonnées régulièrement, c'est le cas par exemple de certaines cartographies participatives dans lesquelles les données sont fournies par des utilisateurs.

### [Exposé de l'invention]

Compte-tenu de ce qui précède, un but de l'invention est de proposer un moyen d'identifier et de qualifier des virages, qui soit plus robuste à des échantillonnages variables de données de cartographies routières que les méthodes de l'art antérieur.

Un autre but de l'invention est de minimiser la quantité de calculs devant être mis en oeuvre par un véhicule pour avertir un conducteur d'un virage et l'informer sur la courbure et la dangerosité du virage.

Un autre but de l'invention est de permettre de détecter un virage présentant un resserrement et d'en avertir le conducteur.

A cet égard, l'invention a pour objet un procédé de caractérisation de la courbure d'un tronçon de route, dans lequel le tronçon de route est décrit par une suite ordonnée de points, chaque point étant décrit par des coordonnées, le procédé étant remarquable en ce qu'il comprend la mise en oeuvre, par un calculateur, d'étapes de :

a) sélection, parmi les points du tronçon, des points marquant une courbure du tronçon,
b) calcul, pour chaque point sélectionné du tronçon compris entre le deuxième et l'avant-dernier, d'un indicateur de courbure du tronçon en ce point, l'indicateur de courbure du tronçon en un point étant égal à la variation d'angle du tronçon au niveau du point sélectionné courant, divisée par la distance entre le point sélectionné courant et le point sélectionné précédent,

c) identification de chaque virage compris dans le tronçon de route, chaque virage comprenant un ensemble de points sélectionnés du tronçon successifs, et

d) pour chaque virage compris dans le tronçon de route, la comparaison de l'indicateur de courbure d'au moins l'un des points du virage à un seuil prédéterminé, et

e) si l'indicateur de courbure calculé pour au moins l'un des points sélectionnés du virage excède le seuil prédéterminé, enregistrement dans une base de données de virages d'un ensemble de données comprenant au moins l'ensemble des points du virage, et une donnée de caractérisation de la courbure du virage.

La donnée de caractérisation de la courbure du virage peut comprendre la somme des angles du virage calculés en chaque point du virage, et/ou la valeur moyenne de l'indicateur de courbure pour l'ensemble des points du virage.

Avantageusement, l'ensemble de données enregistré dans la base de données de virages comprend en outre au moins un paramètre parmi le groupe suivant :

- un identifiant de virage,

- pour chaque point du virage, l'angle du tronçon de route audit point, correspondant à l'angle formé par un segment reliant le point courant au point précédent et un segment reliant le point courant au point suivant,

- pour chaque point du virage, la distance du tronçon de route entre le point et le point précédent,

- pour chaque point du dernier virage, la valeur de l'indicateur de courbure calculé pour le point, et

- si au moins l'un des indicateurs de courbure calculés excède un deuxième seuil supérieur au premier, un indicateur de dangerosité du virage.

Avantageusement, l'étape de sélection des points marquant une courbure du tronçon est mise en oeuvre par application de l'algorithme de Douglas-Peucker.

La mise en oeuvre de l'algorithme de Douglas-Peucker comprend la comparaison d'une distance entre un point du tronçon et un segment reliant les extrémités du tronçon à une distance seuil, et la distance seuil est de préférence déterminée en fonction de paramètres du tronçon de route comprenant :

- nature du réseau routier auquel appartient le tronçon,

- fréquence d'acquisition des points du tronçon,

- niveau de précision sur les coordonnées géographiques des points du tronçon.

Dans un mode de réalisation, les étapes b) à e) sont mises en oeuvre, pour chaque tronçon, une première fois dans un sens de parcours des points sélectionnés du tronçon, et une deuxième fois dans l'autre sens de parcours des points sélectionnés du tronçon.

Dans un mode de réalisation, l'identification d'un virage comprend l'attribution, à chaque point sélectionné du tronçon, d'un identifiant de virage, tel que deux points consécutifs du tronçon sont associés à un même identifiant de virage si :

- le tronçon a le même sens de rotation en les deux points consécutifs, et

- la distance séparant les deux points consécutifs est inférieure à un seuil, ou les indicateurs de courbure en les deux points consécutifs sont supérieurs en valeur absolue à un seuil prédéterminé.

Dans un mode de réalisation, le procédé comprend en outre le calcul d'un indicateur de resserrement de courbure du virage et, si l'indicateur est supérieur à un seuil de resserrement prédéterminé, l'enregistrement dans l'ensemble des données d'une indication de resserrement du virage. L'indicateur de resserrement peut être calculé comme suit, pour chacun des points sélectionnés du tronçon pour lesquels un indicateur de courbure est calculé, à partir du deuxième :

[Math. 1]

$$\frac{\alpha_j - \alpha_{j-1}}{\left\| M_{j-1,j} M_{j,j+1} \right\|}$$

Où $\alpha_j$ est l'indicateur de courbure calculé en un point sélectionné j du tronçon, et Mj désigne le milieu du segment reliant le point sélectionné j au point sélectionné suivant du tronçon.

L'invention a également pour objet un produit programme d'ordinateur, comprenant une série d'instructions de code pour la mise en oeuvre du procédé de caractérisation de courbure selon la description qui précède, quand il est mis en oeuvre par un calculateur.

L'invention a aussi pour objet un dispositif d'avertissement de virages pour un conducteur de véhicule, comprenant :

- un dispositif de géolocalisation du véhicule,
- une interface Homme-Machine, adaptée pour produire un signal sonore et/ou lumineux à l'attention du conducteur du véhicule,

- une interface de connexion à un réseau de télécommunications, et
- un calculateur électronique, remarquable en ce qu'il est adapté pour communiquer par le réseau de télécommunications à une base de données de virages distante obtenue par la mise en oeuvre, sur une pluralité de tronçons de routes, du procédé tel que décrit précédemment, et en ce que le calculateur électronique est configuré pour :

--envoyer à la base de données distante une requête comportant la localisation du véhicule,
--recevoir de la base de données distante, pour chaque virage contenu dans une zone de superficie déterminée autour de la localisation du véhicule, l'ensemble de données correspondant audit virage enregistré dans la base de données distante, et
--à partir de la localisation et du cap du véhicule, détecter un prochain virage abordé par le véhicule et commander l'interface Homme-Machine pour signaler le prochain virage au conducteur, la distance séparant le véhicule du virage et la donnée de caractérisation de la courbure du virage.

Dans un mode de réalisation, un ensemble de données correspondant à un virage enregistré dans la base de données de virages et reçu par le calculateur électronique comprend en outre au moins l'une des informations complémentaires suivantes :

- indication de dangerosité du virage, et

- indication de resserrement du virage.

Le calculateur électronique est en outre configuré pour commander l'interface Homme-Machine afin de signaler au conducteur l'ensemble des informations complémentaires disponibles concernant le prochain virage, simultanément au signalement dudit virage.
L'invention porte égale sur un véhicule, comprenant un dispositif d'avertissement de virages selon la description qui précède.
L'invention porte enfin sur un système d'avertissement de virages, comprenant une base de données de virages, la base de données de virages étant obtenue par la mise en oeuvre du procédé selon la description qui précède sur un ensemble de tronçons de routes, et au moins un dispositif d'avertissement de virages précédemment décrit.
Le procédé de caractérisation de la courbure d'un tronçon de route proposé est robuste à des fréquences d'échantillonnage variables de données cartographiques. En effet, il comprend d'une part un filtrage permettant de ne conserver que des points marquant la courbure du tronçon, même pour un échantillonnage trop important ou irrégulier. Ce filtrage permet donc de supprimer de nombreux points non pertinents et donc aussi de diminuer la quantité de calculs requise.
D'autre part, l'indicateur de courbure utilisé est simple à calculer mais permet de caractériser un virage de manière à permettre à un conducteur d'adapter sa vitesse à l'abord de ce virage.
On peut ainsi élaborer une base de données de virages dans laquelle seuls les virages présentant un degré de courbure supérieur à un certain seuil sont référencés, et ceci pour tout un territoire. Une partie seulement de ces données, correspondant à une zone dans laquelle se trouve un véhicule, peut être chargée dans le véhicule pour avertir le conducteur. Ainsi le nombre de calcul réalisés dans le véhicule est très limité.

**[Description des dessins]**

D'autres caractéristiques, buts et avantages de l'invention ressortiront de la description qui suit, qui est purement illustrative et non limitative, et qui doit être lue en regard des dessins annexés sur lesquels :

[Fig. 1] - la **figure 1** représente schématiquement les principales étapes d'un procédé de caractérisation de virages selon un mode de réalisation de l'invention.

[Fig. 2] la **figure 2** représente un système d'avertissement de virages selon un mode de réalisation de l'invention,

[Fig. 3a] la **figure 3a** représente schématiquement un exemple de mise en oeuvre d'un algorithme de Douglas-Peucker pour la sélection des points marquant une courbure dans un tronçon de route.

[Fig. 3b] la **figure 3b** représente schématiquement un exemple de mise en oeuvre d'un algorithme de Douglas-Peucker pour la sélection des points marquant une courbure dans un tronçon de route.

[Fig. 3c] la **figure 3c** représente schématiquement un exemple de mise en oeuvre d'un algorithme de Douglas-Peucker pour la sélection des points marquant une courbure dans un tronçon de route.

[Fig. 4a] la **figure 4a** représente les notations adoptées pour le calcul d'un indicateur de courbure d'un tronçon de route parcouru par ordre croissant d'indices des points,

[Fig. 4b] la **figure 4b** représente les angles formés entre les segments du tronçon de route de la **figure 4a** parcouru par ordre décroissant d'indices des points.

**[Description des modes de réalisation]**

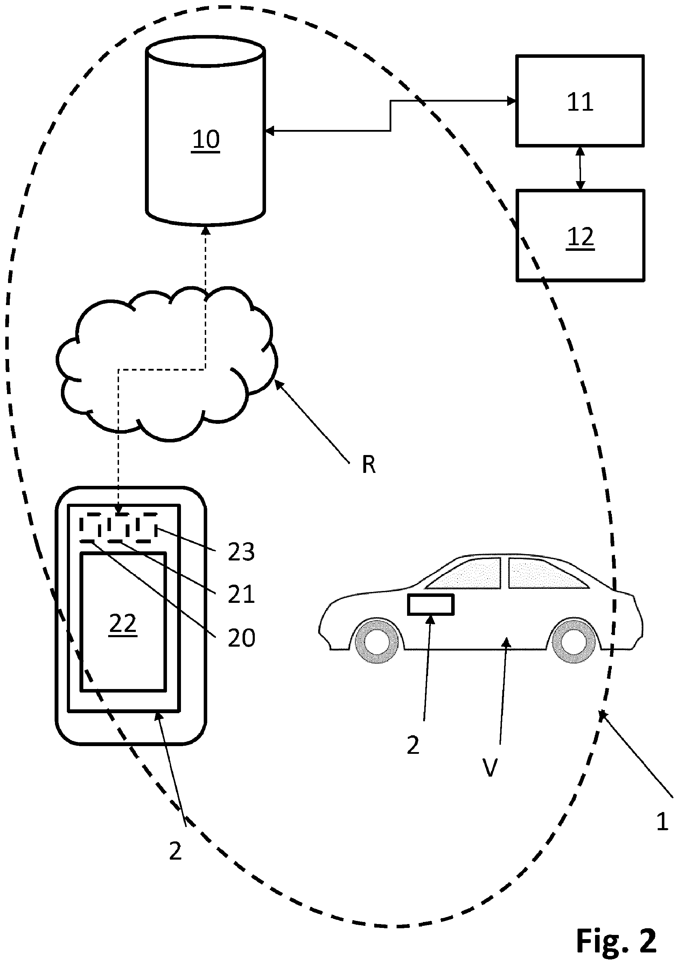

En référence à la **figure 2,** on a représenté un système 1 d'avertissement de virages qui comprend une pluralité de dispositifs 2 d'avertissement de virages pouvant être embarqués dans des véhicules, et une base de données 10 de virages distante, à laquelle les dispositifs 2 peuvent accéder à distance via un réseau de télécommunications R.

La base de données 10 de virages comprend un recensement d'un ensemble de virages couvrant un territoire, et pour chaque virage un ensemble de données défini ci-après.

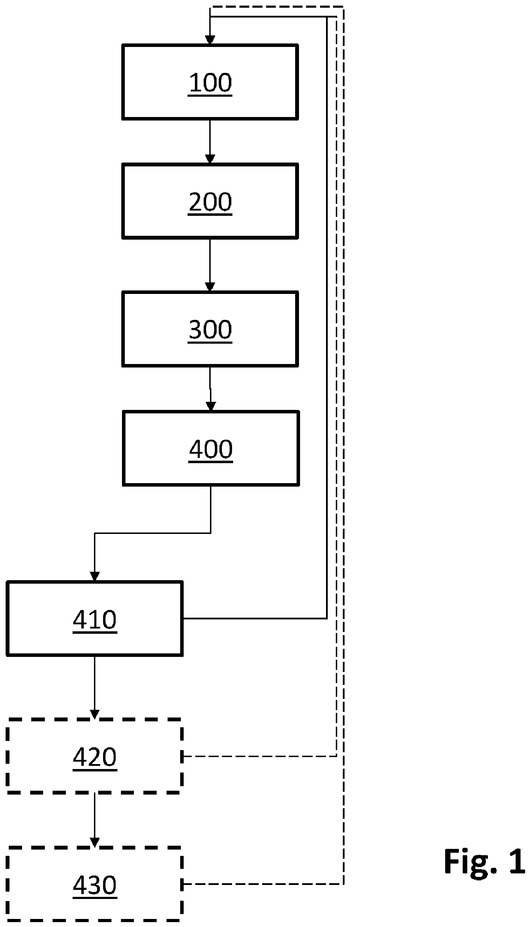

En référence à la **figure 1,** on va maintenant décrire un procédé de caractérisation de virages permettant d'ajouter un virage et les données le caractérisant à la base de données 10 de virages.

Ce procédé est mis en oeuvre par un calculateur 11 (cf. **figure 2),** par exemple un processeur, un microprocesseur, un microcontrôleur ou autre, à partir d'un ensemble de données cartographiques stockées dans une mémoire 12. Les données cartographiques comprennent des données relatives à un ensemble de tronçons de route d'un territoire, chaque tronçon de route étant défini par une suite ordonnée de points, et chaque point étant défini par des coordonnées géographiques. Par exemple, les coordonnées géographiques d'un point sont le couple « latitude / longitude » dudit point.

Les points de la suite ordonnée de points définissant un tronçon peuvent avoir été acquis avec une fréquence d'acquisition variable, c'est-à-dire que la distance entre deux points consécutifs de la suite peut être variable.

Avantageusement, mais facultativement, les données relatives à un tronçon de route comprennent, outre la suite ordonnée de points, des informations complémentaires relatives à la nature de la route à laquelle appartient le tronçon, et/ou aux caractéristiques des données acquises.

Par exemple, les informations relatives à la nature de la route peuvent comprendre des informations sur le type de route à laquelle appartient le tronçon (autoroute, route nationale, route en agglomération, chemin non bitumé, etc.), la largeur de la route, ou encore sur le nombre de files et le sens de circulation (sens unique ou deux sens) de la route.

Les informations relatives aux caractéristiques des données acquises peuvent comprendre des informations de fréquence d'acquisition ou d'incertitude sur les données.

La mémoire 12, ou une mémoire distincte, stocke également des instructions de code pour la mise en oeuvre, par le calculateur, du procédé de caractérisation de virages.

Le procédé de caractérisation de virage est mis en oeuvre pour chaque tronçon de route stocké dans la mémoire 12. Il comprend une étape 100 de sélection, parmi les points d'un tronçon, des points marquant une courbure du tronçon. Cette étape permet d'harmoniser des variations de fréquences d'acquisition entre les points du tronçon, en ne conservant que les points porteurs de l'information de courbure.

Cette étape 100 est avantageusement mise en oeuvre par application de l'algorithme de Douglas-Peucker.

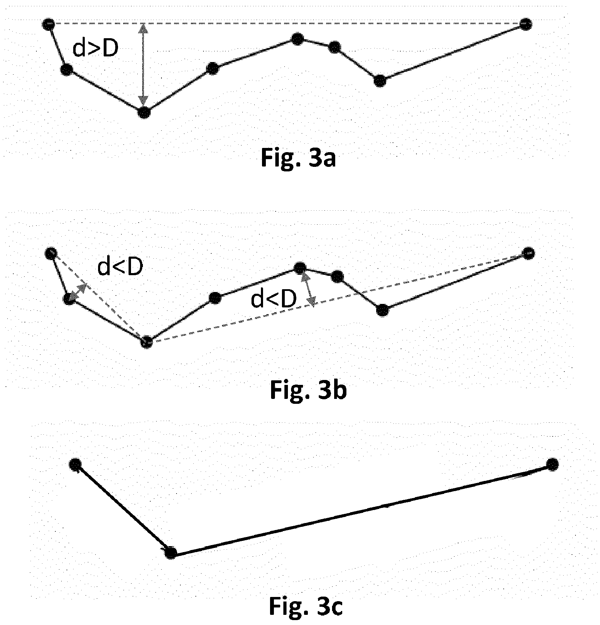

En référence aux **figures 3a** à **3c,** cet algorithme comprend une initialisation consistant à définir les bornes du tronçon, qui sont les points extrêmes du tronçon, et à définir une distance seuil D permettant de caractériser la courbure du tronçon.

L'algorithme comprend ensuite l'application récursive des étapes suivantes :

- S'il n'y a aucun point entre les bornes du tronçon : fin de l'algorithme,
- Sinon, sélection du point du tronçon le plus éloigné du segment formé par les bornes :

     --Si la distance d entre ce point et le segment formé par les bornes est inférieure à la distance seuil D, suppression de tous les points entre les bornes (cf **figure 3b),**
     -Sinon, alors on définit deux nouveaux segments formés des bornes du tronçon au point sélectionné, et on définit les nouvelles bornes comme les extrémités des deux nouveaux segments (cf **figure 3c).**

Avantageusement, la distance seuil D utilisée dans l'implémentation de cet algorithme peut varier en fonction du tronçon considéré, cette distance seuil étant déterminée en fonction des informations sur le type de route et/ou des informations concernant les caractéristiques des données acquises.

Par exemple, la distance seuil D peut être plus importante si le tronçon de route concerne une autoroute, ou si la précision sur les données est faible. Elle peut être plus faible si le tronçon concerne une route nationale, ou si la précision sur les données est meilleure.

Cet algorithme permet de ne conserver qu'une partie des points initiaux du tronçon, qui sont les points marquant la courbure du tronçon.

Le procédé comprend ensuite une étape 200 comprenant le calcul d'un indicateur de courbure du tronçon sur les points sélectionnés à l'issue de l'étape 100.

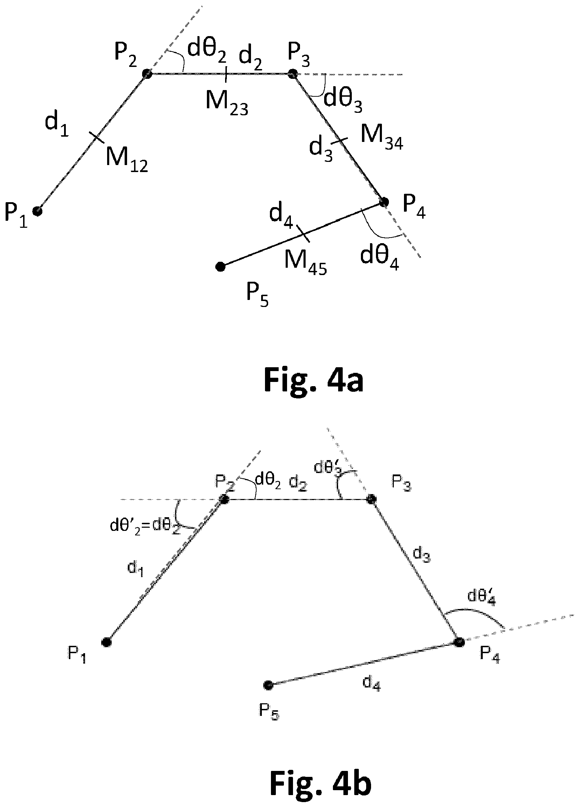

En référence à la **figure 4a,** l'indicateur de courbure $\alpha_i$ d'un point $P_i$ du tronçon est égal à la variation d'angle du tronçon au niveau du point $P_i$, c'est-à-dire l'angle formé entre le segment reliant le point précédent $P_{i-1}$ au point $P_i$, et le segment reliant le point $P_i$ au point suivant Pi., divisé par la distance entre le point $P_i$ et le point précédent.

Sur l'exemple de la **figure 4a,** on a noté les points $P_i$ pour i = 1 à 5, $d_i$ pour i = 1 à 4 la distance entre le point $P_i$ et $P_{i+1}$, et $d\theta_i$ pour i = 2 à 4 la variation d'angle au point $P_i$, c'est-à-dire l'angle formé entre le segment [Pi₋₁,Pᵢ] et le segment [Pᵢ,Pᵢ₊₁].

On a donc :

[Math. 2]

$$\alpha_i = \frac{d\theta_i}{d_{i-1}} , \forall\ i \in \{2,3,4\} \quad (1)$$

L'étape 200, comprend donc :

- le calcul de la distance $d_i$ correspondant à chaque point $P_i$ sélectionné à l'issue de l'étape 100, excepté le dernier,
- le calcul de la variation d'angle $d\theta_i$ en chaque point $P_i$ sélectionné à l'issue de l'étape 100, excepté le premier et le dernier point (car $d\theta_i$ n'est pas défini en ces points), et
- le calcul de l'indicateur de courbure $\alpha_i$ en chaque point $P_i$ sélectionné à l'issue de l'étape 100, excepté le premier et le dernier point.

Avantageusement, comme un tronçon de route peut contenir plusieurs virages, le procédé comprend une étape supplémentaire 300 permettant d'identifier chaque virage d'un tronçon de route.

Cette étape est avantageusement mise en oeuvre en attribuant un identifiant de virage $v_i$ à chaque point $P_i$ où l'indicateur de courbure $\alpha_i$ est défini. En effet, par la sélection des points $P_i$ réalisées à l'étape 100, chaque point $P_i$ correspond nécessairement à un virage, même si celui-ci est de faible courbure. De la sorte, tous les points associés à un même identifiant de virage correspondent à un virage identifié par cet identifiant.

Pour l'attribution d'un identifiant de virage à chaque point $P_i$ associé à un indicateur de courbure, sont considérés comme appartenant au même virage deux points successifs $P_i$ et $P_{i+1}$ qui vérifient les conditions suivantes :

- Le virage a le même sens de rotation en $P_i$ et en $P_{i+1}$, ce qui se traduit par le fait que $d\theta_i$ et $d\theta_{i+1}$ sont de même signe,
- Le virage ne peut pas être constitué de deux points ayant le même sens de rotation mais séparés par un segment sensiblement droit, ce qui se traduit par le fait que la distance $d_i$ séparant $P_i$ et $P_{i+1}$ doit rester inférieure à une distance seuil $d_{seuil}$ prédéterminée.

Formellement, l'ensemble des points $P_i$ d'indices $i \in [a, b]$ (a et b étant des entiers strictement positifs) définit un seul et même virage si et seulement si $[a, b]$ est le plus grand intervalle qui vérifie :

[Math. 3]

$$\begin{cases} \forall i \in\ ]a, b-1[, d\theta_i \times d\theta_{i+1} \geq 0 \quad (C1) \\ \forall i \in [a, b[, d_i \leq d_{seuil} \quad (C2) \end{cases}$$

En variante, la condition (C2) peut être remplacée par la condition alternative (C2bis) qui suit : les segments composant le virage doivent satisfaire une condition minimale de courbure, sans quoi le virage est considéré comme terminé puisque trop droit. Cela se traduit par le fait qu'en tout point $P_i$ du virage, la valeur absolue de l'indicateur de courbure $\alpha_i$ doit rester supérieure ou égal à une valeur seuil $\alpha_{droit}$ prédéterminée.

L'intervalle de points d'indices $[a, b]$ définit alors un seul et même virage si et seulement si l'intervalle $[a, b]$ est le plus grand intervalle qui vérifie :

[Math. 4]

$$\begin{cases} \forall i \in\ ]a, b-1[, d\theta_i \times d\theta_{i+1} \geq 0 \quad (C1) \\ \forall i \in [a, b[, |\alpha_i| \geq \alpha_{droit} \quad (C2bis) \end{cases}$$

$\alpha_{droit}$ est une valeur réelle positive, préférablement comprise entre 0,05 et 10 °/m, par exemple égale à 0,1 °/m.

A l'issue de l'étape 300, chaque point $P_i$ est donc associé à un identifiant de virage $v_i$ et l'ensemble des points appartenant à un même virage est associé à un même identifiant. Le tronçon peut contenir plusieurs virages.

Puis, lors d'une étape 400, pour chaque virage identifié lors de l'étape 300, au moins l'un des indicateurs de courbure calculés à l'étape 200 pour un point du virage considéré est comparé en valeur absolue à un seuil prédéterminé $\alpha_{seuil}$. Le seuil prédéterminé peut être différent du seuil utilisé pour la condition (C2bis) décrite ci-avant. Par exemple, le seuil, supérieur ou égal à 0, est avantageusement compris entre 0,01 et 60 °/m, par exemple égal à 1 °/m.

Dans un mode de réalisation préféré, l'étape 400 comprend la détermination pour chaque virage de la valeur maximale des indicateurs de courbures calculés à l'étape 200, et la comparaison de cette valeur maximale au seuil prédéterminé.

En variante, l'étape 400 peut comprendre la comparaison de chaque indicateur de courbure calculé au seuil prédéterminé. Selon encore une autre variante, chaque indicateur de courbure du virage est comparé au seuil prédéterminé jusqu'à ce que l'un des indicateurs de courbure excède ledit seuil.

Dans le cas où au moins un indicateur de courbure calculé à l'étape 200 est supérieur en valeur absolu au seuil prédéterminé, alors le virage est considéré lors d'une étape 410 comme un virage suffisamment serré et des données correspondant à ce virage sont stockées dans la base de données de virages 10.

Dans le cas où dans tout le virage, aucun indicateur de courbure n'est supérieur au seuil en valeur absolue (ou, selon la manière dont est implémentée cette étape, si la valeur absolue de l'indicateur de courbure maximal du virage est inférieure au seuil), le virage considéré n'est pas qualifié comme suffisamment serré, et aucune donnée n'est ajoutée à la base de données de virages 10.

Du fait que la géométrie des virages n'est pas nécessairement symétrique, la qualification d'un virage doit être mise en oeuvre deux fois pour chaque tronçon, en parcourant le tronçon dans les deux sens. Pour cela, les étapes 200 à 410 sont répétées pour le tronçon dont les points sont parcourus une première fois par ordre croissant des indices des points composant le tronçon, et une deuxième fois par ordre décroissant d'indices des points composant le tronçon.

En référence à la figure 4b, on obtient de nouveaux indicateurs pour un même tronçon parcouru en sens inverse:

[Math. 5]

$$\alpha'_i = \frac{d\theta_i}{d_i}, \forall\, i\, \in \{2,3,4\} \qquad (2)$$

On note d'après la **figure 4b** que l'angle $d\theta'_i$ entre deux segments successifs est égal à l'angle $d\theta_i$ calculé pour le même point dans le premier sens de parcours, puisque ce sont des angles opposés. On a donc remplacé $d\theta'_i$ par $d\theta_i$ dans l'équation (2) ci-dessus.

Les conditions préférées qui définissent un virage :

[Math. 6]

$$\begin{cases} \forall i \in\ ]a, b-1[, d\theta_i \times d\theta_{i+1} \geq 0 \ \ (C1) \\ \quad\quad \forall i \in [a, b[, d_i \leq d_{seuil} \ (C2) \end{cases}$$

Deviennent alors :

[Math. 7]

$$\begin{cases} \forall i \in\ ]a, b-1[, d\theta_i \times d\theta_{i+1} \geq 0 \ \ (C1) \\ \quad\quad \forall i \in [a, b[, d_{i+1} \leq d_{seuil} \ (C2') \end{cases}$$

En variante, on peut également mettre en oeuvre la condition (C2bis) décrite ci-avant qui devient une condition (C2bis)' traduite par le fait qu'en tout point $P_i$ du virage, la valeur absolue de l'indicateur de courbure $|\alpha'_i|$ doit rester supérieure ou égale à $\alpha_{droit}$.

L'ensemble des points d'indices [a, b] définit alors un seul et même virage si et seulement si l'intervalle [a, b] est le plus grand intervalle qui vérifie :

[Math. 8]

$$\begin{cases} \forall i \in\ ]a, b-1[, d\theta_i \times d\theta_{i+1} \geq 0 \ \ (C1) \\ \quad \forall i \in [a, b[, |\alpha'_i| \geq \alpha_{droit} \ (C2bis)' \end{cases}$$

Le procédé peut être répété pour le tronçon suivant (flèche retournant à l'étape 100 sur la **figure 1).**

Les données mémorisées lors de l'étape 410 relativement à chaque tronçon sont adaptées pour permettre une caractérisation des virages du tronçon.

Ainsi, ces données comprennent au minimum :

- l'ensemble des points sélectionnés pour ce tronçon à l'issue de l'étape 100, et
- pour chaque virage, une donnée de caractérisation de la courbure du virage, cette donnée comprenant la somme des angles $d\theta_i$ calculés à l'étape 200 pour l'ensemble des points du virage, qui correspond donc à la courbure totale du virage, et/ou la valeur moyenne de l'indicateur $\alpha_i$ calculé à l'étape 200 sur l'ensemble des points du virage, qui permet donc de caractériser si le virage est serré ou non.

Avantageusement, l'ensemble des données mémorisées pour un virage comprend aussi les données suivantes :
L'identifiant $v_i$ du virage,

- pour chaque point sélectionné du virage, l'angle $d\theta_i$ du tronçon de route audit point (sauf pour le premier et le dernier point du tronçon où cette donnée n'est pas disponible),
- pour chaque point sélectionné du virage, la distance $d_i$ du segment de route entre le point sélectionné et le point précédent (sauf pour le dernier point du tronçon où la donnée n'est pas disponible),
- pour chaque point sélectionné du virage, la valeur de l'indicateur de courbure $\alpha_i$ calculé pour le point (sauf pour le premier et le dernier point du tronçon où cette donnée n'est pas disponible).

L'ensemble de données peut également comprendre les coordonnées d'un point central du virage ou encore les coordonnées du point où l'indicateur de courbure est maximal, et l'identifiant du sens dans lequel est abordé le virage. Par conséquent, en fonction du sens, un même virage peut n'être enregistré dans la mémoire que pour un sens de circulation, ou s'il est enregistré pour les deux sens de circulation, la valeur maximale de l'indicateur de courbure peut être différente puisque celui-ci n'est pas symétrique (cf formules 1 et 2).

Avantageusement, l'ensemble de données comprend en outre les coordonnées géographiques d'un ensemble de points supplémentaires situés en amont du virage, par rapport à la direction de déplacement du véhicule, et formant un chemin d'alerte. Comme décrit plus en détails par la suite, ce chemin d'alerte peut être utilisé pour détecter la présence d'un véhicule sur le point d'aborder le virage, et pour signaler le virage au conducteur. On comprend que les coordonnées des points du chemin d'alerte changent aussi en fonction du sens dans lequel le virage est abordé.

Avantageusement, lorsqu'un virage est enregistré dans la base de données de virages, le procédé comprend en outre une étape 420 au cours de laquelle la valeur maximale de l'indicateur de courbure pour le virage est comparée à un deuxième seuil prédéterminé $\alpha'$, supérieur au premier seuil $\alpha_{seuil}$ et au seuil de la condition C2bis $\alpha_{droit}$. Ce seuil est avantageusement établi de manière à caractériser la dangerosité d'un virage. Par exemple, ce seuil est avantageusement compris entre 5 et 60 °/m.

Si l'indicateur de courbure maximal du virage est supérieur à ce deuxième seuil, alors l'ensemble des données relatives au virage comprend en outre une indication de dangerosité du virage. Cette indication peut être une variable binaire vrai / faux.

En variante, cette étape peut comprendre la comparaison de la valeur maximale de l'indicateur de courbure à une pluralité de seuils pour pouvoir situer le virage sur une échelle de dangerosité en fonction de la courbure maximale. Dans le cas, l'indication de dangerosité du virage peut correspondre au classement du virage dans l'échelle de dangerosité.

De plus, le procédé de caractérisation de virage permet avantageusement de caractériser le resserrement d'un virage, c'est-à-dire le fait que la courbure initiale du virage soit inférieure à sa courbure maximale. En effet, le resserrement d'un virage peut être particulièrement dangereux, notamment pour les motards, puisque la courbure initiale du virage peut générer un manque de visibilité empêchant le conducteur de se rendre compte que cette courbure augmente ensuite.

Pour ce faire le procédé comprend avantageusement la mise en oeuvre, pour chaque virage enregistré dans la base, d'une étape supplémentaire 430 au cours de laquelle, à partir du deuxième point pour lequel l'indicateur de courbure a été calculé au cours de l'étape 200, un indicateur de resserrement au niveau du point est calculé et comparé à un seuil prédéterminé. Si l'indicateur calculé est supérieur audit seuil pour au moins l'un des points pour lesquels il est calculé, alors l'ensemble de données relatif au virage enregistré dans la base de données de virages comprend un indicateur de resserrement du virage, qui peut typiquement être une valeur binaire vrai / faux.

Selon un mode de réalisation préféré, l'indicateur de resserrement en un point $P_i$ est calculé comme suit :

[Math. 9]

$$\frac{\alpha_i - \alpha_{i-1}}{\left\| \overline{M_{i-1,i}M_{i,i+1}} \right\|} \; , \quad \forall \, i \in \{3, \dots, n-1\}$$

Où $M_{i,j}$ est la position géographique du point milieu du segment reliant deux points $P_i$ et $P_j$.

Dans ce cas, le seuil auquel est comparé entre cet indicateur de resserrement est avantageusement compris entre 0 et 10, par exemple égal à 5,5.

En variante, l'indicateur de resserrement peut être calculé comme suit :

[Math. 10]

$$\frac{\alpha_i - \alpha_{i-1}}{d_i} \; , \quad \forall \, i \in \{3, \dots, n-1\}$$

Pour cette variante, le seuil auquel est comparé cet indicateur de resserrement est aussi compris entre 0 et 10, par exemple à 5,5.

La mise en oeuvre du procédé décrit ci-avant sur tous les tronçons de route recensés sur une zone géographique donnée permet donc d'élaborer une base de données des virages sur la zone géographique.

Cette base de données est ensuite utilisée par des utilisateurs de véhicule, en fonction de leur localisation.

De retour à la **figure 2,** on a représenté un dispositif 2 d'avertissement de virages pour un conducteur de véhicule. Le véhicule V peut typiquement être une voiture, mais il peut également s'agir d'une moto, un scooter, un camion, ou tout autre véhicule.

Le dispositif 2 d'avertissement de virages comprend un dispositif de géolocalisation 20 du véhicule V, par exemple un capteur de positionnement par satellite ou GPS, une interface de connexion 21 au réseau de télécommunications R, par exemple un réseau utilisant l'un des protocoles GPRS, EDGE, UMTS, 3G, 4G, Wifi, WIMAX, Internet, etc., permettant au dispositif 2 d'avertissement de virages de communiquer avec la base de données de virages 10 via le réseau de télécommunications R.

Le dispositif 2 d'avertissement de virages comprend également une interface Homme-Machine 22, adaptée pour produire un signal sonore et/ou lumineux à l'attention du conducteur de véhicule V. Par exemple cette interface peut avantageusement comprendre un écran sur lequel des informations peuvent être affichées, ou un ou plusieurs voyants lumineux. Elle peut également comprendre un haut-parleur adapté pour diffuser des signaux sonores.

Le dispositif 2 d'avertissement de virages comprend également un calculateur 23, qui peut être un processeur, un microprocesseur, un contrôleur, microcontrôleur, etc.

Selon un mode de réalisation avantageux, le dispositif 2 d'avertissement de virages est intégré au véhicule V. Dans ce cas, l'interface Homme-Machine 22 peut être intégrée à une interface de diffusion d'informations du véhicule V telle qu'un écran de bord ou un tableau de bord, et comprendre également le ou les haut-parleurs du véhicule V. Dans ce cas également, le calculateur 23, l'interface de connexion 21 au réseau et le dispositif de géolocalisation 20 sont des éléments intégrés au véhicule V.

En variante, le dispositif 2 d'avertissement de virages peut être intégré à un dispositif électronique personnel d'un conducteur ou utilisateur du véhicule V, tel qu'un téléphone mobile, ou une tablette tactile. Dans ce cas, le calculateur 23, l'interface de connexion 20 et le dispositif de géolocalisation 20 sont intégrés au téléphone ou à la tablette, et l'interface Homme-Machine 22 est formée par l'écran du téléphone ou de la tablette ainsi que le ou les haut-parleurs.

Le calculateur 23 est configuré pour récupérer auprès du dispositif de géolocalisation 20 des informations de localisation du véhicule V, et envoyer une requête à la base de données, comprenant les informations de localisation du véhicule V.

En réponse à cette requête, le calculateur 23 reçoit de la base de données les ensembles de données correspondant à chacun des virages se trouvant dans une zone géographique déterminée, qui est fonction de la localisation géographique du véhicule V envoyée à la base de données.

Selon un exemple non limitatif, l'ensemble des virages comprenant au moins un point dans une zone géographique d'une superficie prédéterminée autour de la localisation du véhicule V sont sélectionnés et les données correspondantes sont transmises au calculateur 23.

Selon un autre exemple, l'ensemble des virages dont le point milieu, ou un le point pour lequel l'indicateur est maximal en valeur absolue, se trouve à une distance du véhicule V inférieure à une distance seuil, sont sélectionnés et les données correspondantes sont transmises au calculateur 23. Cette distance seuil est comprise entre 1 et 100 km, par exemple 15 km.

La fréquence de transmission par le calculateur 23 des informations de localisation du véhicule V dépend de la taille de la zone géographique dans laquelle se trouvent les virages dont les données sont récupérées. Plus cette zone géographique est grande, et plus la fréquence de transmission est faible, mais en revanche plus la quantité de données à charger par le calculateur 23 est importante.

Une fois des données de virages récupérées pour une zone géographique, le calculateur 23 est configuré pour détecter un prochain virage abordé par le véhicule V parmi l'ensemble des virages dont il a chargé les données, à partir de la localisation actualisée du véhicule V, et pour commander à l'interface Homme-Machine l'émission d'un signal d'avertissement concernant le prochain virage.

Pour ce faire, le calculateur 23 reçoit les données de localisation du dispositif de localisation du véhicule V à une fréquence supérieure à celle mise en oeuvre à l'étape 300. Par exemple, le calculateur peut recevoir les données de localisation du véhicule V une fois par seconde, cette fréquence est généralement comprise entre 5 fois par seconde et 1 fois toutes les 5 secondes.

Pour détecter le prochain virage abordé par le véhicule V, le calculateur 23 enregistre les données actualisées de localisation ainsi que le cap du véhicule V, et les compare aux points du chemin d'accès de chaque virage et à la direction des segments formant ce chemin d'accès.

Si la distance entre la localisation du véhicule V et la position du point utilisé pour la comparaison est inférieure à un seuil et que le cap du véhicule V est proche de celui suivi par le chemin d'alerte, alors le calculateur 23 déduit que le véhicule V va aborder le virage.

Optionnellement, la distance entre la localisation du véhicule V et le début du prochain virage détecté est comparée à un deuxième seuil, inférieur au premier seuil, et si cette distance est inférieure au deuxième seuil, l'alerte n'est pas envoyée pour ne pas perturber le conducteur alors qu'il est trop proche du virage et n'aura pas le temps de réagir. Cette deuxième distance seuil est de préférence comprise entre 0 et 200 m, par exemple fixée à 30 m.

Le signal d'avertissement produit par l'interface Homme-Machine pour signaler un virage comprend au moins une indication de l'existence du virage, et la donnée de caractérisation mémorisée avec le virage, c'est-à-dire soit la valeur maximale de l'indicateur de courbure, soit la valeur totale de la courbure du virage (c'est-à-dire la somme des angles $d\theta_i$ calculés pour le virage).

Selon un exemple non limitatif, le signal d'avertissement peut être un signal visuel comprenant une flèche dans la direction du virage (gauche ou droite) pour signaler l'existence du virage, couplée à une valeur qui correspond à la courbure totale du virage.

Avantageusement, dans le cas où, lors du procédé de caractérisation du virage, l'indicateur de courbure maximal du virage excède le deuxième seuil de dangerosité, l'interface Homme-Machine produit également une indication de dangerosité du signal. A titre d'exemple non limitatif, cette indication peut être une indication visuelle de la forme d'un point d'exclamation, ou être un signal sonore.

En variante, quand l'indicateur de courbure maximal du virage a été comparé lors de l'étape 420 du procédé de caractérisation à plusieurs seuils pour caractériser la dangerosité du virage, l'indication fournie par l'interface Homme-Machine peut être le degré de dangerosité du virage.

Ce degré de dangerosité peut être plus parlant pour un conducteur et peut alors remplacer la valeur maximale de l'indicateur de courbure dans le signal d'avertissement produit par l'interface Homme-Machine.

Dans le cas où le procédé de caractérisation comprend également la détermination d'un resserrement du virage, l'interface Homme-Machine produit également une indication du resserrement du virage.

## Revendications

1. Procédé de caractérisation de la courbure d'un tronçon de route, dans lequel le tronçon de route est décrit par une suite ordonnée de points, chaque point étant décrit par des coordonnées, le procédé étant **caractérisé en ce qu'**il comprend la mise en oeuvre, par un calculateur (11), d'étapes de :

   - a) sélection (100), parmi les points du tronçon, des points marquant une courbure du tronçon,
   - b) calcul (200), pour chaque point sélectionné du tronçon compris entre le deuxième et l'avant-dernier, d'un indicateur de courbure du tronçon en ce point, l'indicateur de courbure du tronçon en un point étant égal à la variation d'angle du tronçon au niveau du point sélectionné courant, divisée par la distance entre le point sélectionné courant et le point sélectionné précédent,
   - c) identification (300) de chaque virage compris dans le tronçon de route, chaque virage comprenant un ensemble de points sélectionnés du tronçon, et
   - d) pour chaque virage compris dans le tronçon de route, la comparaison (400) de l'indicateur de courbure d'au moins l'un des points du virage à un seuil prédéterminé, et
   - e) si l'indicateur de courbure calculé pour au moins l'un des points sélectionnés du virage excède le seuil prédéterminé, enregistrement (410) dans une base de données de virages d'un ensemble de données comprenant au moins l'ensemble des points du virage, et une donnée de caractérisation de la courbure du virage,
   - f) réception une requête comportant la localisation d'un véhicule, et
   - g) pour chaque virage contenu dans une zone de superficie déterminée autour de la localisation du véhicule reçue dans la requête, transmission audit véhicule de l'ensemble de données correspondant audit virage enregistré dans la base de données.

2. Procédé de caractérisation de courbure selon la revendication 1, dans lequel la donnée de caractérisation de la courbure du virage comprend la somme des angles du virage calculés en chaque point du virage, et / ou la valeur moyenne de l'indicateur de courbure pour l'ensemble des points du virage.

3. Procédé de caractérisation de courbure d'un tronçon de route selon l'une quelconque des revendications 1 ou 2, dans lequel l'ensemble de données enregistré dans la base de données de virages comprend en outre au moins l'un parmi le groupe suivant :

   - un identifiant de virage ($v_i$),
   - pour chaque point ($P_i$) du virage, l'angle du tronçon ($d\theta_i$) de route audit point, correspondant à l'angle formé par un segment reliant le point courant au point précédent et un segment reliant le point courant au point suivant,
   - pour chaque point ($P_i$) du virage, la distance ($d_i$) du tronçon de route entre le point et le point précédent,
   - pour chaque point ($P_i$) du dernier virage, la valeur de l'indicateur de courbure ($\alpha_i$, $\alpha'_i$) calculé pour le point, et
   - si au moins l'un des indicateurs de courbure calculés excède un deuxième seuil supérieur au premier, un indicateur de dangerosité du virage.

4. Procédé de caractérisation de la courbure d'un tronçon de route selon l'une quelconque des revendications précédentes, dans lequel l'étape (100) de sélection des points marquant une courbure du tronçon est mise en oeuvre par application de l'algorithme de Douglas-Peucker.

5. Procédé de caractérisation de courbure selon la revendication 4, dans lequel la mise en oeuvre de l'algorithme de Douglas-Peucker comprend la comparaison d'une distance (d) entre un point du tronçon et un segment reliant les extrémités du tronçon à une distance seuil (D), et la distance seuil (D) est déterminée en fonction de paramètres du tronçon de route comprenant :

   - nature du réseau routier auquel appartient le tronçon,
   - fréquence d'acquisition des points du tronçon,
   - niveau de précision sur les coordonnées géographiques des points du tronçon.

6. Procédé de caractérisation de courbure selon l'une quelconque des revendications précédentes, dans lequel les étapes b) à e) sont mises en oeuvre, pour chaque tronçon, une première fois dans un sens de parcours des points sélectionnés du tronçon, et une deuxième fois dans l'autre sens de parcours des points sélectionnés du tronçon.

7. Procédé de caractérisation de courbure selon l'une quelconque des revendications précédentes, dans lequel l'identification d'un virage (300) comprend l'attribution, à chaque point sélectionné du tronçon, d'un identifiant de virage ($v_i$), tel que deux points consécutifs ($P_i$, $P_{i+1}$) du tronçon sont associés à un même identifiant de virage ($v_i$) si :

   - le tronçon a le même sens de rotation en les deux points consécutifs, et

- la distance ($d_i$) séparant les deux points consécutifs est inférieure à un seuil ($d_{seuil}$), ou les indicateurs de courbure en les deux points consécutifs sont supérieurs en valeur absolue à un seuil prédéterminé ($\alpha_{droit}$).

**8.** Procédé de caractérisation de courbure selon l'une quelconque des revendications précédentes, comprenant en outre le calcul (430) d'un indicateur de resserrement de courbure du virage et, si l'indicateur est supérieur à un seuil de resserrement prédéterminé, l'enregistrement dans l'ensemble des données d'une indication de resserrement du virage.

**9.** Procédé de caractérisation de courbure selon la revendication 8, dans lequel l'indicateur de resserrement est calculé comme suit, pour chacun des points sélectionnés du tronçon pour lesquels un indicateur de courbure est calculé, à partir du deuxième :

[Math. 1]

$$\frac{\alpha_j - \alpha_{j-1}}{\left\| \overrightarrow{M_{J-1,J}M_{J,J+1}} \right\|}$$

Où $\alpha_j$ est l'indicateur de courbure calculé en un point sélectionné j du tronçon, et $M_{j,j+1}$ désigne le milieu du segment reliant le point sélectionné j au point sélectionné suivant du tronçon.

**10.** Produit programme d'ordinateur, comprenant une série d'instructions de code pour la mise en oeuvre du procédé de caractérisation de courbure selon l'une quelconque des revendications qui précèdent, quand il est mis en oeuvre par un calculateur (11).

**11.** Dispositif d'avertissement (2) de virages pour un conducteur de véhicule, comprenant :

- un dispositif de géolocalisation du véhicule (20),
- une interface Homme-Machine (22), adaptée pour produire un signal sonore et/ou lumineux à l'attention du conducteur du véhicule,
- une interface de connexion (21) à un réseau de télécommunications (R), et
- un calculateur électronique (23),

**caractérisé en ce que** le calculateur électronique (23) est adapté pour communiquer par le réseau de télécommunications (R) à une base de données (10) de virages distante obtenue par la mise en oeuvre, sur une pluralité de tronçons de routes, du procédé selon l'une quelconque des revendications 1 à 9, et **en ce que** le calculateur électronique (23) est configuré pour :

- envoyer à la base de données (10) distante, une requête comportant la localisation du véhicule,
- recevoir de la base de données distante (10), pour chaque virage contenu dans une zone de superficie déterminée autour de la localisation du véhicule, l'ensemble de données correspondant audit virage enregistré dans la base de données distante (10), et
- à partir de la localisation et du cap du véhicule, détecter un prochain virage abordé par le véhicule et commander l'interface Homme-Machine (22) pour signaler le prochain virage au conducteur, la distance séparant le véhicule du virage et la donnée de caractérisation de la courbure du virage.

**12.** Dispositif d'avertissement (2) de virages selon la revendication 11, dans lequel un ensemble de données correspondant à un virage enregistré dans la base de données de virages (10) et reçu par le calculateur électronique (23) comprend en outre au moins l'une des informations complémentaires suivantes :

-- indication de dangerosité du virage, et
-- indication de resserrement du virage,

et le calculateur électronique (23) est en outre configuré pour commander l'interface Homme-Machine (22) pour signaler au conducteur l'ensemble des informations complémentaires disponibles concernant le prochain virage, simultanément au signalement dudit virage.

**13.** Véhicule (V), comprenant un dispositif d'avertissement (2) de virages selon l'une quelconque des revendications 11 ou 12.

**14.** Système (1) d'avertissement de virages, comprenant une base de données de virages (10), la base de données de virages étant obtenue par la mise en oeuvre du procédé selon l'une quelconque des revendications 1 à 9 sur un ensemble de tronçons de routes, et au moins un dispositif (2) d'avertissement de virages selon l'une des revendications 11 ou 12.

**Patentansprüche**

**1.** Verfahren zur Charakterisierung der Krümmung eines Straßenabschnitts, wobei der Straßenabschnitt durch eine geordnete Folge von Punkten beschrieben wird, wobei jeder Punkt durch Koordinaten beschrieben wird, wobei das Verfahren **dadurch gekennzeichnet ist, dass** es die Umsetzung, durch eine Recheneinheit (11), folgender Schritte beinhaltet:

- a) Auswählen (100), aus den Punkten des Abschnitts, der Punkte, die eine Krümmung des Abschnitts markieren,
- b) Berechnen (200), für jeden ausgewählten Punkt des Abschnitts zwischen dem zweiten und dem vorletzten, eines Krümmungsindikators des Abschnitts an diesem Punkt, wobei der Krümmungsindikator des Abschnitts an einem Punkt gleich der Winkeländerung des Abschnitts im Bereich des aktuellen ausgewählten Punkts ist, geteilt durch den Abstand zwischen dem aktuellen ausgewählten Punkt und dem vorhergehenden ausgewählten Punkt,
- c) Identifizieren (300) jeder in dem Straßenabschnitt enthaltenen Kurve, wobei jede Kurve einen Satz ausgewählter Punkte des Abschnitts beinhaltet, und
- d) für jede in dem Straßenabschnitt enthaltene Kurve, Vergleichen (400) des Krümmungsindikators mindestens eines der Punkte der Kurve mit einer vorbestimmten Schwelle, und
- e) wenn der für mindestens einen der ausgewählten Punkte der Kurve berechnete Krümmungsindikator die vorbestimmte Schwelle überschreitet, Aufzeichnen (410), in einer Kurvendatenbank, eines Datensatzes, der mindestens den Satz Punkte der Kurve und ein Datenelement zur Charakterisierung der Krümmung der Kurve beinhaltet,
- f) Empfangen einer Anfrage, die den Standort eines Fahrzeugs umfasst, und
- g) für jede Kurve, die in einem bestimmten Flächenbereich rund um den in der Anfrage empfangenen Standort des Fahrzeugs enthalten ist, Übertragen, an das Fahrzeug, des Datensatzes, der der in der Datenbank aufgezeichneten Kurve entspricht.

2. Verfahren zur Charakterisierung einer Krümmung nach Anspruch 1, wobei das Datenelement zur Charakterisierung der Krümmung der Kurve die Summe der an jedem Punkt der Kurve berechneten Winkel der Kurve und/oder den Mittelwert des Krümmungsindikators für den Satz Punkte der Kurve beinhaltet.

3. Verfahren zur Charakterisierung einer Krümmung eines Straßenabschnitts nach einem der Ansprüche 1 oder 2, wobei der Datensatz, der in der Kurvendatenbank aufgezeichnet ist, ferner mindestens eines aus der folgenden Gruppe beinhaltet:

- eine Kurvenkennung ($v_i$),
- für jeden Punkt ($P_i$) der Kurve, den Winkel ($d\theta_i$) des Straßenabschnitts an dem Punkt, der dem Winkel entspricht, der durch ein Segment, das den aktuellen Punkt mit dem vorhergehenden Punkt verbindet, und ein Segment, das den aktuellen Punkt mit dem folgenden Punkt verbindet, gebildet wird,
- für jeden Punkt ($P_i$) der Kurve, den Abstand ($d_i$) des Straßenabschnitts zwischen dem Punkt und dem vorhergehenden Punkt,
- für jeden Punkt ($P_i$) der letzten Kurve, den Wert des für den Punkt berechneten Krümmungsindikators ($\alpha_i$, $\alpha'_i$), und
- wenn mindestens einer der berechneten Krümmungsindikatoren eine zweite Schwelle, die größer als die erste ist, überschreitet, einen Gefährlichkeitsindikator der Kurve.

4. Verfahren zur Charakterisierung der Krümmung eines Straßenabschnitts nach einem der vorhergehenden Ansprüche, wobei der Schritt (100) des Auswählens der Punkte, die eine Krümmung des Abschnitts markieren, durch Anwendung des Douglas-Peucker-Algorithmus umgesetzt wird.

5. Verfahren zur Charakterisierung einer Krümmung nach Anspruch 4, wobei die Umsetzung des Douglas-Peucker-Algorithmus das Vergleichen eines Abstands (d) zwischen einem Punkt des Abschnitts und einem Segment, das die Enden des Abschnitts verbindet, mit einem Schwellenabstand (D) beinhaltet und der Schwellenabstand (D) in Abhängigkeit von Parametern des Straßenabschnitts bestimmt wird, die Folgendes beinhalten:

- Art des Straßennetzes, zu dem der Abschnitt gehört,
- Erfassungsfrequenz der Punkte des Abschnitts,
- Genauigkeitsgrad der geographischen Koordinaten der Punkte des Abschnitts.

6. Verfahren zur Charakterisierung einer Krümmung nach einem der vorhergehenden Ansprüche, wobei die Schritte b) bis e) für jeden Abschnitt ein erstes Mal in einer Verlaufsrichtung der ausgewählten Punkte des Abschnitts und ein zweites Mal in der anderen Verlaufsrichtung der ausgewählten Punkte des Abschnitts umgesetzt werden.

7. Verfahren zur Charakterisierung einer Krümmung nach einem der vorhergehenden Ansprüche, wobei das Identifizieren einer Kurve (300) das Zuweisen einer Kurvenkennung ($v_i$) zu jedem ausgewählten Punkt des Abschnitts beinhaltet, sodass zwei aufeinanderfolgende Punkte ($P_i$, $P_{i+1}$) des Abschnitts mit einer gleichen Kurvenkennung ($v_i$) assoziiert sind, wenn:

- der Abschnitt an den zwei aufeinanderfolgenden Punkten die gleiche Rotationsrichtung aufweist und
- der Abstand ($d_i$), der die zwei aufeinanderfolgenden Punkte trennt, kleiner als eine Schwelle

($d_{Schwelle}$) ist oder die Krümmungsindikatoren an den zwei aufeinanderfolgenden Punkten vom Absolutwert her größer als eine vorbestimmte Schwelle ($\alpha_{gerade}$) sind.

8. Verfahren zur Charakterisierung einer Krümmung nach einem der vorhergehenden Ansprüche, ferner beinhaltend das Berechnen (430) eines Krümmungsverengungsindikators der Kurve und, wenn der Indikator größer als eine vorbestimmte Verengungsschwelle ist, Aufzeichnen, in dem Datensatz, einer Verengungsangabe der Kurve.

9. Verfahren zur Charakterisierung einer Krümmung nach Anspruch 8, wobei der Verengungsindikator für jeden der ausgewählten Punkte des Abschnitts, für die ein Krümmungsindikator berechnet wird, ab dem zweiten wie folgt berechnet wird:

[Math. 1]

$$\frac{\alpha_j - \alpha_{j-1}}{\|\overrightarrow{M_{J-1,J}M_{J,J+1}}\|}$$

wobei $\alpha_j$ der an einem ausgewählten Punkt j des Abschnitts berechnete Krümmungsindikator ist und $M_{j,j,1}$ die Mitte des Segments, das den ausgewählten Punkt j mit dem folgenden ausgewählten Punkt des Abschnitts verbindet, bezeichnet.

10. Computerprogrammprodukt, das eine Reihe von Codeanweisungen zur Umsetzung des Verfahrens zur Charakterisierung einer Krümmung nach einem der vorhergehenden Ansprüche beinhaltet, wenn es durch eine Recheneinheit (11) umgesetzt wird.

11. Vorrichtung zur Warnung (2) eines Fahrers eines Fahrzeugs vor Kurven, beinhaltend:

- eine Vorrichtung zur Geolokalisierung des Fahrzeugs (20),
- eine Mensch-Maschine-Schnittstelle (22), die dazu angepasst ist, ein Ton- und/oder Lichtsignal für den Fahrer des Fahrzeugs zu produzieren,
- eine Schnittstelle zur Verbindung (21) mit einem Telekommunikationsnetz (R) und
- eine elektronische Recheneinheit (23),

**dadurch gekennzeichnet, dass** die elektronische Recheneinheit (23) dazu angepasst ist, über das Telekommunikationsnetz (R) mit einer entfernten Kurvendatenbank (10) zu kommunizieren, welche durch die Umsetzung, an einer Vielzahl von Straßenabschnitten, des Verfahrens nach einem der Ansprüche 1 bis 9 erhalten wird, und dass die elektronische Recheneinheit (23) für Folgendes konfiguriert ist:

- Senden, an die entfernte Datenbank (10), einer Anfrage, die den Standort des Fahrzeugs umfasst,
- Empfangen, von der entfernten Datenbank (10), für jede in einem bestimmten Flächenbereich rund um den Standort des Fahrzeugs enthaltene Kurve, des Datensatzes, der der in der entfernten Datenbank (10) aufgezeichneten Kurve entspricht, und
- anhand des Standorts und des Kurses des Fahrzeugs, Erkennen einer nächsten Kurve, der sich das Fahrzeug nähert, und Ansteuern der Mensch-Maschine-Schnittstelle (22), um dem Fahrer die nächste Kurve, den Abstand, der das Fahrzeug von der Kurve trennt, und das Datenelement zur Charakterisierung der Krümmung der Kurve zu melden.

12. Kurvenwarnvorrichtung (2) nach Anspruch 11, wobei ein einer Kurve entsprechender Datensatz, der in der Kurvendatenbank (10) gespeichert ist und durch die elektronische Recheneinheit (23) empfangen wird, ferner mindestens eine der folgenden zusätzlichen Informationen beinhaltet:

-- Gefährlichkeitsangabe der Kurve und
-- Verengungsangabe der Kurve,

und die elektronische Recheneinheit (23) ferner dazu konfiguriert ist, die Mensch-Maschine-Schnittstelle (22) anzusteuern, um dem Fahrer den Satz verfügbarer zusätzlicher Informationen für die nächste Kurve gleichzeitig mit der Meldung der Kurve zu melden.

13. Fahrzeug (V), das eine Kurvenwarnvorrichtung (2) nach einem der Ansprüche 11 oder 12 beinhaltet.

14. Kurvenwarnsystem (1), das eine Kurvendatenbank (10), wobei die Kurvendatenbank durch die Umsetzung des Verfahrens nach einem der Ansprüche 1 bis 9 an einem Satz Straßenabschnitte erhalten wird, und mindestens eine Kurvenwarnvorrichtung (2) nach einem der Ansprüche 11 oder 12 beinhaltet.

**Claims**

1. Method for characterizing the curvature of a road section, wherein the road section is described by an ordered sequence of points, each point being described by coordinates, the method being **characterized in that** it comprises a computer (11) implementing the following steps:

- a) selecting (100), from among the points of the section, points marking a curvature of the section,

- b) computing (200), for each selected point of the section between the second one and the penultimate one, an indicator of curvature of the section at this point, the indicator of curvature of the section at a point being equal to the variation in the angle of the section at the current selected point divided by the distance between the current selected point and the previous selected point,

- c) identifying (300) each bend contained in the road section, each bend comprising a set of selected points of the section, and

- d) for each bend contained in the road section, comparing (400) the indicator of curvature of at least one of the points of the bend with a predetermined threshold, and

- e) if the indicator of curvature computed for at least one of the selected points of the bend exceeds the predetermined threshold, recording (410), in a database of bends, a dataset comprising at least the set of points of the bend, and a datum characterizing the curvature of the bend,

- f) receiving a request comprising the location of a vehicle, and

- g) for each bend contained within a determined surface area around the location of the vehicle as received in the request, transmitting, to said vehicle, the dataset corresponding to said bend recorded in the database.

2. Method for characterizing curvature according to Claim 1, wherein the datum characterizing the curvature of the bend comprises the sum of the angles of the bend as computed at each point of the bend, and/or the average value of the indicator of curvature for the set of points of the bend.

3. Method for characterizing the curvature of a road section according to either one of Claims 1 and 2, wherein the dataset recorded in the database of bends furthermore comprises at least one from the following group:

　　- a bend identifier ($v_i$),
　　- for each point ($P_i$) of the bend, the angle of the road section ($d\theta_i$) at said point, corresponding to the angle formed by a segment connecting the current point to the previous point and a segment connecting the current point to the following point,
　　- for each point ($P_i$) of the bend, the distance ($d_i$) of the road section between the point and the previous point,
　　- for each point ($P_i$) of the last bend, the value of the indicator of curvature ($\alpha_i$, $\alpha'_i$) computed for the point, and
　　- if at least one of the computed indicators of curvature exceeds a second threshold greater than the first one, an indicator of hazardousness of the bend.

4. Method for characterizing the curvature of a road section according to any one of the preceding claims, wherein the step (100) of selecting points marking a curvature of the section is implemented by applying the Douglas-Peucker algorithm.

5. Method for characterizing curvature according to Claim 4, wherein implementing the Douglas-Peucker algorithm comprises comparing a distance (d) between a point of the section and a segment connecting the ends of the section to a threshold distance (D), and the threshold distance (D) is determined on the basis of parameters of the road section comprising:

　　- nature of the road network to which the section belongs,
　　- frequency of acquisition of the points of the section,
　　- level of accuracy regarding the geographical coordinates of the points of the section.

6. Method for characterizing curvature according to any one of the preceding claims, wherein steps b) to e) are implemented, for each section, a first time in a direction of travel of the selected points of the section, and a second time in the other direction of travel of the selected points of the section.

7. Method for characterizing curvature according to any one of the preceding claims, wherein identifying a bend (300) comprises assigning a bend identifier ($v_i$) to each selected point of the section, such that two consecutive points ($P_i$, $P_{i+1}$) of the section are associated with one and the same bend identifier ($v_i$) if:

　　- the section has the same direction of rotation at the two consecutive points, and
　　- the distance ($d_i$) separating the two consecutive points is less than a threshold ($d_{threshold}$), or the indicators of curvature at the two consecutive points are greater, in terms of absolute value, than a predetermined threshold ($\alpha_{right}$).

8. Method for characterizing curvature according to any one of the preceding claims, furthermore comprising computing (430) an indicator of tightening of the curvature of the bend and, if the indicator is greater than a predetermined tightening threshold, recording an indication of tightening of the bend in the dataset.

9. Method for characterizing curvature according to Claim 8, wherein the indicator of tightening is computed as follows, for each of the selected points of the section for which an indicator of curvature is computed, starting from the second one:

[Math. 1]

$$\frac{\alpha_j - \alpha_{j-1}}{\left\| \overrightarrow{M_{J-1,J} M_{J,J+1}} \right\|}$$

where $\alpha_j$ is the indicator of curvature computed at a selected point j of the section, and $M_{j,j+1}$ denotes the middle of the segment connecting the selected point j to the following selected point of the section.

10. Computer program product comprising a sequence of code instructions for implementing the method for characterizing curvature according to any one of the preceding claims when it is implemented by a computer (11).

11. Device (2) for warning about bends for a vehicle driver, comprising:

- a vehicle geolocation device (20),
- a human-machine interface (22), designed to produce an audible and/or luminous signal for the attention of the driver of the vehicle,
- a connection interface (21) to a telecommunications network (R), and
- an electronic computer (23),

**characterized in that** the electronic computer (23) is designed to communicate, via the telecommunications network (R), with a remote database (10) of bends that is obtained by implementing the method according to any one of Claims 1 to 9 on a plurality of road sections, and **in that** the electronic computer (23) is configured to:

- send, to the remote database (10), a request comprising the location of the vehicle,
- receive, from the remote database (10), for each bend contained within a determined surface area around the location of the vehicle, the dataset corresponding to said bend recorded in the remote database (10), and
- on the basis of the location and the heading of the vehicle, detect an upcoming bend approached by the vehicle and commanding the human-machine interface (22) to signal the upcoming bend to the driver, the distance separating the vehicle from the bend and the datum characterizing the curvature of the bend.

12. Device (2) for warning about bends according to Claim 11, wherein a dataset corresponding to a bend recorded in the database of bends (10) and received by the electronic computer (23) furthermore comprises at least one of the following additional items of information:

-- indication of hazardousness of the bend, and
-- indication of tightening of the bend,

and the electronic computer (23) is furthermore configured to command the human-machine interface (22) to signal, to the driver, all of the available additional items of information relating to the upcoming bend, at the same time as signalling said bend.

13. Vehicle (V), comprising a device (2) for warning about bends according to either one of Claims 11 and 12.

14. System (1) for warning about bends, comprising a database of bends (10), the database of bends being obtained by implementing the method according to any one of Claims 1 to 9 on a set of road sections, and at least one device (2) for warning about bends according to either of Claims 11 and 12.

**Fig. 1**

**Fig. 2**

d>D

**Fig. 3a**

d<D

d<D

**Fig. 3b**

**Fig. 3c**

**Fig. 4a**

**Fig. 4b**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2005251335 A1
- US 6138084 B
- FR 2920240 A1

- US 5465089 A
- EP 3385673 A1

**Littérature non-brevet citée dans la description**

- **R. ANDRÁŠIK et al.** *Identification of Curves and Straight Sections on Road Networks from Digital Vector Data*

- Discrète Curvature Based on Osculating Circle Estimation. **D. COEURJOLLY et al.** Visual Form 2001, Lecture Notes in Computer Science. Springer, 2001, vol. 2059